## Europäisches Patentamt

## European Patent Office

## Office européen des brevets

(19)

(11) Veröffentlichungsnummer: **0 064 160**
**A1**

(12) **EUROPÄISCHE PATENTANMELDUNG**

(21) Anmeldenummer: **82102740.6**

(22) Anmeldetag: **31.03.82**

(51) Int. Cl.³: **G 01 N 31/12**

(30) Priorität: **22.04.81 DE 3116049**

(43) Veröffentlichungstag der Anmeldung:
**10.11.82 Patentblatt 82/45**

(84) Benannte Vertragsstaaten:
**AT BE CH DE FR GB IT LI LU NL SE**

(71) Anmelder: **Antek Instruments GmbH**
**Sybelstrasse 31**
**D-4000 Düsseldorf(DE)**

(72) Erfinder: **Bartke, Rolf, Dr.**
**Sybelstrasse 31**
**D-4000 Düsseldorf(DE)**

(74) Vertreter: **Schmidt-Evers, Jürgen et al,**
**Patentanwälte Dipl.-Ing.H.Mitscherlich**
**Dipl.-Ing.K.Gunschmann Dr.rer.nat.W.Körber**
**Dipl.-Ing.J.Schmidt-Evers**
**Steinsdorfstrasse 10 D-8000 München 22(DE)**

(54) Verbrennungsapparat für die Elementaranalyse.

(57) Gegenstand der Erfindung ist ein Verbrennungsapparat (1) für die Elementaranalyse. In Röhrchen (29) vorhandene Feststoffproben werden durch eine automatische Einführvorrichtung (33) in den Verbrennungsapparat (1) eingeführt. Die automatische Einführvorrichtung (33) ist mit einer automatischen Ladevorrichtung (34) für die Röhrchen (29) versehen. Um die Abmessungen des Verbrennungsapparates (1) einerseits in vertretbare Grenzen zu halten und andererseits möglichst große für das zu untersuchende Material repräsentative Probemengen verbrennen zu können, ist das zur Verbrennung dienende Quarzrohr (7) in der Hauptverbrennungszone gewunden und vorzugsweise in Form einer Wendel (27) ausgebildet. Vom Verbrennen flüssiger Proben dient ein durchbohrter Stopfen (59) zum Verschließen der Eingangsöffnung (4) des Quarzrohres (7). Der Stopfen (59) ist durchbohrt und mit einem plastischen Material (62) verschlossen. Dieses kann mit einer Injektionsnadel (64) zum Einspritzen des flüssigen Probematerials durchstochen werden. Nach dem Herausziehen der Injektionsnadel (64) bildet das plastische Material (62) wieder einen gasdichten Verschluß

FIG. 2

Croydon Printing Company Ltd.

EP 0 064 160 A1

31. März 1982

Verbrennungsapparat für die Elementaranalyse

Die Erfindung betrifft einen Verbrennungsapparat für die Elementaranalyse, insbesondere für die Stickstoffanalyse, mit einem Quarzrohr, das sich ausgehend von einer Einführöffnung für das zu untersuchende Medium durch eine Aufschlußzone und durch eine Hauptverbrennungszone bis zu einer Ausgangsöffnung erstreckt, mit mindestens einem Sauerstoffzuführungsanschluß, an dem in der Aufschlußzone befindlichen Abschnitt des Quarzrohres, mit einem ersten Heizvorrichtungsteil, welcher eine Veränderung der Heiztemperatur in der Aufschlußzone nach einem bestimmten zeitlichen Programm erlaubt, mit einem zweiten Heizvorrichtungsteil zum Heizen der Hauptverbrennungszone mit einer im wesentlichen konstanten Temperatur, und mit mindestens einem Verschlußstopfen für die Einführöffnung des Quarzrohres.

Die in der Verbrennungsapparatur der vorstehend beschriebenen Art durch Verbrennen der Probe erzeugten und der Ausgangsöffnung des Quarzrohres entnehmbaren Gase können einem Spektrometer zugeführt werden, um die Gase auf ihre Bestandteile zu untersuchen.

Für die Verarbeitung von Feststoffproben werden bei einem Verbrennungsapparat der eingangs beschriebenen Art Verschlußstopfen verwendet, an denen eine Aufnahmeschale für die Feststoffprobe vorgesehen ist. Die zu analysierenden Feststoffproben werden von Hand in eine Aufnahmeschale eingefüllt. Das Einführen des Verschlußstopfens mit der daran befindlichen und die Feststoffprobe enthaltenden Aufnahmeschale in die Einführöffnung des Quarzrohres erfolgt ebenfalls von Hand.

Ferner ist zu dem bekannten Verbrennungsapparat festzustellen, daß der sich durch die Verbrennungszone erstreckende Abschnitt des Quarzrohres fluchtend gradlinig mit dem sich durch die Aufschlußzone erstreckenden Abschnitt ausgebildet ist und daher die gleiche durch die Abmessungen des Apparates beschränkte Länge wie die Hauptverbrennungszone hat. Dadurch ist die mit einer Probe zu analysierende Feststoffmenge auf etwa 100 mg beschränkt. Würde man eine größere Probenmenge in die Aufschlußzone des Quarzrohres einführen, so müßte dem Sauerstoffzuführungsanschluß eine entsprechend größere Menge Sauerstoff zugeführt werden. Dies hätte eine größere Strömungsgeschwindigkeit des Sauerstoffes und des sich entwickelnden Gases in dem Quarzrohr zur Folge. Eine größere Strömungsgeschwindigkeit würde wiederum dazu führen, daß sich das in der Aufschlußzone entwickelnde Gas, das in der Hauptverbrennungszone mit dem Sauerstoff reagieren soll, in der Hauptverbrennungszone eine kürzere Zeit verweilen würde. Eine geringere Verweilzeit hätte aber eine unvollständige Reaktion zwischen dem in der Aufschlußzone aus
der Probe entstandenen Gas und dem Sauerstoff zur Folge,
was zu einer Verfälschung des Analysenergebnisses führen
würde. Man erkennt also, daß hier eine Grenze für die
verwendete Probenmenge gegeben ist.

Eine zu geringe Probenmenge, beispielsweise eine solche
von 100 mg ist jedoch häufig mit dem Nachteil behaftet,
daß sie für den zu analysierenden Stoff, von dem sie entnommen wurde, nicht repräsentativ ist, weil dieser Stoff
nicht in ausreichender Homogenität vorliegt.

Der Erfindung liegt die Aufgabe zugrunde, den Durchsatz an analysierter Probenmenge pro Zeiteinheit zu
erhöhen.

Ausgehend von dem Verbrennungsapparat der eingangs beschriebenen Art besteht ein erster Lösungsvorschlag
darin, daß für die Feststoffanalyse - wie an sich bekannt - an jedem Verschlußstopfen eine Aufnahmeschale
für die Feststoffprobe vorgesehen ist, welche beim Einführen des Verschlußstopfens in die Einführöffnung in
den in der Aufschlußzone des Quarzrohres befindlichen
Abschnitt ragt,und daß eine automatische Einführvorrichtung zum aufeinanderfolgenden oder wechselweisen
Einführen der mit den Aufnahmeschalen versehenen Verschlußstopfen vorgesehen ist.

Eine zweckmässige Weiterbildung dieses Vorschlages kann
darin bestehen, daß eine automatische Ladevorrichtung
zum Füllen der Aufnahmeschalen an den Verschlußstopfen
mit Feststoffproben vorgesehen ist.

Mit der automatischen Einführvorrichtung und der automatischen Ladevorrichtung sollen die Verlustzeiten beim Probenwechsel vermindert werden.

Ein weiterer Lösungsvorschlag, der im Sinne der Aufgabenstellung geeignet ist, mit dem erstgenannten Lösungsvorschlag zusammenzuwirken, besteht darin, daß der sich durch die Hauptverbrennungszone erstreckende Abschnitt des Quarzrohres gewunden ist. Dadurch kann man größere Probenmengen verwenden, denn die oben erwähnte größere Strömungsgeschwindigkeit wird durch den längeren Weg kompensiert, den das in der Aufschlußzone entstandene Gas und der in der Aufschlußzone zugeführte Sauerstoff in dem gewundenen Abschnitt des Quarzrohres in der Hauptverbrennungszone zurücklegen müssen, so daß ihre Verweilzeit nicht verringert und die Reaktionen der Hauptverbrennungszone vollständig ist.

Vorzugsweise kann der sich durch die Hauptverbrennungszone erstreckende Abschnitt des Quarzrohres nach Art einer Wendel oder einer Spirale gewunden sein.

Ein weiterer Erfindungsvorschlag bezieht sich auf die Analyse flüssiger Proben unter Verwendung eines Verbrennungsapparates der eingangs beschriebenen Art. Um eine möglichst wirtschaftliche Ausnutzung des Verbrennungsapparates zu gewährleisten, d.h. die Zeiten zwischen der Einführung neuer Proben möglichst gering zu halten, wird vorgeschlagen, daß ein durchbohrter Verschlußstopfen vorgesehen ist, dessen Bohrung mit einem plastischen Material verschlossen ist, das mit einer Injektionsnadel zum Einspritzen der flüssigen Probe in das Quarzrohr durchstechbar ist und die Bohrung nach dem Herausziehen der Injektionsnadel wieder gasdicht verschließt.

Ausführungsbeispiele der Erfindung werden nachfolgend anhand der Zeichnungen beschrieben.

Es zeigen:

Figur 1 eine perspektivische Darstellung des Verbrennungsapparates für Feststoffproben;

Figur 2 einen Horizontalschnitt durch den Verbrennungsapparat nach Figur 1, wobei die automatische Ladevorrichtung und die automatische Einführvorrichtung weggelassen sind;

Figur 3 einen Verschlußstopfen mit Injektionsnadel für flüssige Proben.

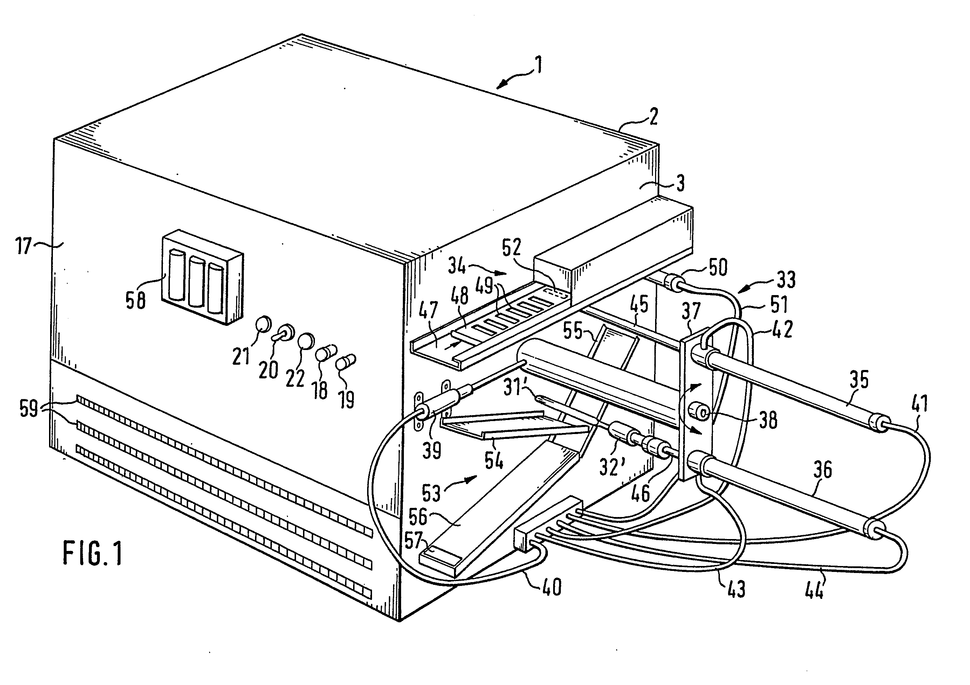

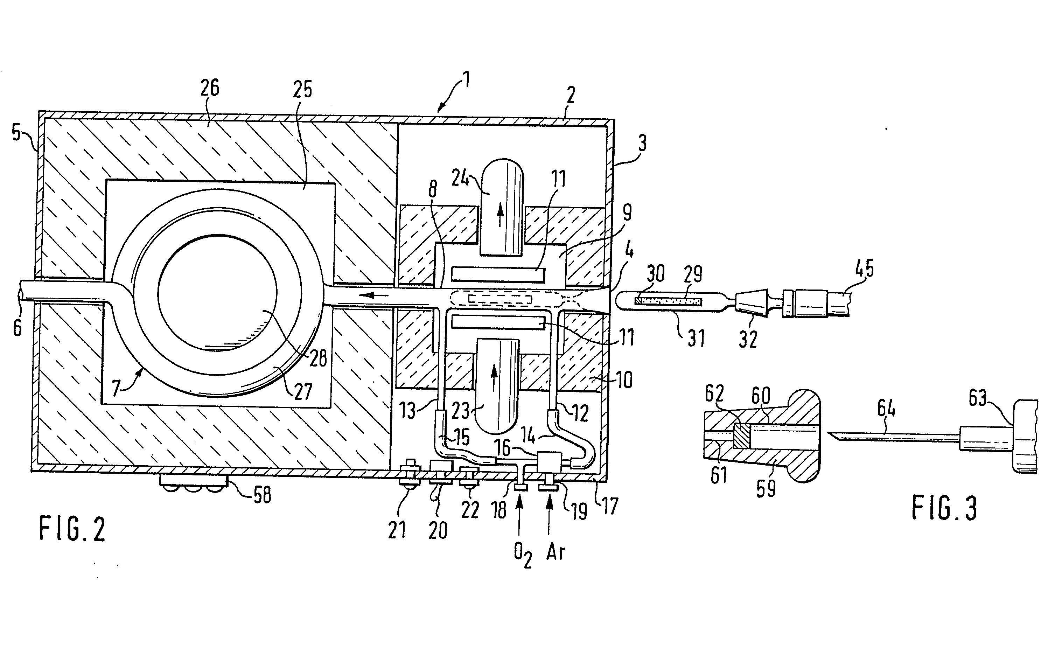

Der in den Figuren 1 und 2 gezeigte Verbrennungsapparat 1 ist mit einem Gehäuse 2 versehen. An der einen Seitenwand 3 befindet sich eine verschließbare Einführöffnung 4 für die zu untersuchenden Proben. An der gegenüberliegenden Seitenwand 5 ist eine Auslaßöffnung 6 für das durch die Verbrennung der Proben entstandene Gas vorgesehen.

Gemäß Figur 2 erstreckt sich durch den Verbrennungsapparat 1 ein Quarzrohr 7. Dieses geht von der Einführöffnung 4 aus und verläuft zunächst in Form eines geraden Rohrabschnittes 8 durch eine sogenannte Aufschlußzone 9, die von wärmeisolierendem Material 1o umgeben ist. Die Aufschlußzone 9 wird durch Heizelemente geheizt, für die am besten sogenannte Quarzhellstrahler geeignet sind.

Der sich durch die Aufschlußzone 9 erstreckende Rohrabschnitt 8 des Quarzrohres 7 ist mit zwei Anschlußstutzen 12,13 versehen. Der Anschlußstutzen 12 befindet sich in Gaströmungsrichtung vor dem Anschluß-stutzen 13. Der Anschlußstutzen 13 ist über einen Verbindungslauf 15 mit einem sich an der Frontseite 17 des Gehäuses 2 befindlichen Gaszuführungsanschluß 18 für Sauerstoff verbunden. Der Anschlußstutzen 12 ist über einen Verbindungsschlauch 14 mit einem Magnetventil 16 verbunden. Das Magnetventil 16 ist ferner mit dem Gaszuführungsanschluß 18 für Sauerstoff und einem weiteren an der Frontseite 17 des Gehäuses 2 befindlichen Gaszuführungsanschluß 19 für ein inertes Gas, beispielsweise für Argon verbunden. Mit einem ebenfalls an der Frontseite 17 des Gehäuses 2 befindlichen Umschalter 2o kann das Magnetventil 16 so gesteuert werden, daß dem Anschlußstutzen 12 entweder nur Sauerstoff oder nur das inerte Gas zugeführt wird. Dem Anschlußstutzen 13 wird dagegen stets nur Sauerstoff zugeführt. Die beiden Schaltzustände werden durch an der Frontseite 17 befindliche Signallampen 21,22 angezeigt.

In dem Gehäuse 2 befindet sich im unteren Teil ferner ein nicht sichtbares Gebläse. Ein Ausgangsrohr 23 des Gebläses mündet in die Aufschlußzone 9. An der gegenüberliegenden Seite befindet sich ein Abführrohr 24 für die Gebläseluft. Mit Hilfe der Gebläseluft ist es möglich, die Quarzhellstrahler 11 und den geraden Abschnitt 8 des Quarzrohres in der Aufschlußzone 9 bei Bedarf, insbesondere vor Einführen einer neuen Probe zu kühlen.

An die Aufschlußzone 9 schließt sich eine Hauptverbrennungszone 25 an, die ebenfalls von Wärmeisolationsmaterial 26 umgeben ist. Das Quarzrohr 7 erstreckt sich durch die Hauptverbrennungszone 25 in Form einer Wendel 27 mit mehreren Windungen. Die Hauptverbrennungszone 25 wird durch einen Widerstandsheizer 28 geheizt.

Das Aufheizen der Aufschlußzone erfolgt progressiv nach einem genau vorbestimmten Temperaturprofil, d.h. nach einem genau vorbestimmten zeitlichen Schema. In der Hauptverbrennungszone wird dagegen die Temperatur auf einem hohen Niveau weitgehend konstant gehalten. Auf diese Weise wird gewährleistet, daß die Probe in möglichst kurzer Zeit vergast und zu einem bestimmten für die nachfolgende Elementaranalyse geeigneten gasförmigen Verbrennungsprodukt verbrannt wird. Dieses gasförmige Verbrennungsprodukt ist beispielsweise bei der Stickstoffanalyse Stockstoffmonoxid NO. In der Aufschlußzone wird die Temperatur für diesen Fall beispielsweise von $100^{\circ}$ auf $900^{\circ}$C gesteigert. In der Hauptverbrennungszone wird die Temperatur bei etwa $1.000^{\circ}$ bis $1.100^{\circ}$C konstant gehalten.

Wesentlich ist, daß das in der Aufschlußzone 9 entstandene Gas in der Hauptverbrennungszone 25 genügend Zeit für eine Reaktion mit dem Sauerstoff hat. Die Reaktionszeit des Gases in der Hauptverbrennungszone 25 hängt von der Strömungsgeschwindigkeit in dem Quarzrohr 7 ab. Diese wiederum hängt von der durch die Gaszuführungsanschlüsse 18,19 zugeführten Menge von Sauerstoff bzw. dem inerten Gas ab. Die Sauerstoffmenge bzw. die Menge des inerten Gases hängt wiederum von der Menge der Probe ab. Je größer die Probenmenge ist, desto größer muß die Länge des Quarzrohres 7, d.h. die Windungszahl des wendelförmigen Quarzrohrabschnittes 27 in der Hauptverbrennungszone 25 sein.

Zu verbrennende Feststoffproben werden in Glasröhrchen 29 eingefüllt, die mit einem abschmelzbaren Propfen 30 versehen sind. Dieser abschmelzbare Pfropfen besteht beispielsweise aus Paraffin, das in der Aufschlußzone 9 flüssig wird und aus dem Röhrchen ausläuft. Dadurch kann das sich aus dem Probenmaterial entwickelnde Gas aus dem Glasröhrchen 29 austreten.

Das Glasröhrchen wird in Form eines an einem Stopfen 32 vorgesehenen Löffel 31 in den geraden Rohrabschnitt 8 des Quarzrohres 7 eingeführt. Der Stopfen 32 verschließt dabei gleichzeitig die Einführöffnung 4. Dies ist durch die gestrichelten Linien in Figur 2 angedeutet. Der Stopfen 32 und der Löffel 31 bestehen aus Glas.

In Figur 1 ist der Verbrennungsapparat 1 mit einer Einführvorrichtung 33 und einer Ladevorrichtung 34 dargestellt. Die Einführvorrichtung besteht aus zwei pneumatisch betätigbaren Schubzylindern 35,36, die an einem Drehteil 37 befestigt sind. Das Drehteil 37 kann um eine Drehachse 38 um $180^{o}C$ gegensinnig vor- und zurückgeschwenkt werden. Zur Drehung dient ein Pneumatikmotor 39, der auf die Drehachse 38 mittels eines nicht sichtbaren Zahnradgetriebes einwirkt. Der Motor 39 ist mittels eines Schlauches 4o mit einer Druckluftquelle verbunden.

Der Schubzylinder 35 ist mittels zwei Schläuchen 41,42 mit der Druckluftquelle verbunden. Der Schubzylinder 36 ist mittels zwei Schläuchen 43,44 mit der Druckluftquelle verbunden.

An der Kolbenstange 45 des Schubzylinders 35 befindet sich der in Figur 2 gezeigte Stopfen 32 mit dem Löffel 31. In Figur 1 ist die Kolbenstange 45 in voll ausgeschobener Stellung dargestellt. Das entspricht in Figur 2 der Stellung des Stopfens und des Löffels, die in gestrichelten Linien angedeutet ist.

Die Zylinderstange 46 des Schubzylinders 36 ist in Figur 1 dagegen vollständig zurückgezogen. Der Löffel 31' an dem Stopfen 32', der von der Zylinderstange 46 gehalten ist, ist hier mit seiner Öffnung nach unten gerichtet.

Zu der Ladevorrichtung 34 gehört eine Führungsplatte 47, auf der eine Magazinplatte 48 verschiebbar gelagert ist. Die Magazinplatte 48 ist mit Aufnahmeöffnungen 49 für die Probenröhrchen 29 versehen. Die Magazinplatte 48 kann mittels eines Pneumatikmotors 5o in Richtung des Pfeiles verschoben werden. Der Pneumatikmotor 5o ist über einen Schlauch 51 mit der Druckluftquelle verbunden. Der Antrieb der Magazinplatte 48 durch den Pneumatikmotor 5o erfolgt durch einen nicht sichtbaren Zahnstangen-Zahnradmechanismus.

In der Führungsplatte 47 befindet sich oberhalb der Einführöffnung 4 (die in Figur 1 nicht sichtbar ist) eine in gestrichelten Linien angedeutete Durchfallöffnung 52. Die Aufnahmeöffnungen 49 in der Magazinplatte 48 und durch Durchfallöffnung 52 in der Führungsplatte 47 sind so dimensioniert, daß sie etwas länger und breiter als die Röhrchen 29 sind, so daß jedes in einer Aufnahmeöffnung 49 befindliche Röhrchen durch die Durchfallöffnung 52 hindurchfällt, wenn die Aufnahmeöffnung 49 über der Durchfallöffnung 52 zu liegen kommt.

Bevor der Löffel 31 in die Einführöffnung 4 eingeschoben wird, wird er vor der Einführöffnung 4 in eine Bereitschaftsposition gesetzt, in der er das durch die Durchfallöffnung 52 hindurchfallende Röhrchen auffängt. Dann wird die Kolbenstange 45 vorgeschoben, wodurch der Löffel 31 mit dem Röhrchen in den geraden Quarzrohrabschnitt 8 eingeführt und die Einführöffnung 4 durch den Stopfen 32 verschlossen wird. Nachdem die Probe verbrannt ist, wird die Kolbenstange 45 vollständig zurückgezogen. Dann wird das Drehteil 37 um 180°C geschwenkt. Bei der Schwenkung wird die Öffnung des Löffels 31 nach unten gedreht. Gleichzeitig wird der Stopfen 32' mit dem daran befindlichen Löffel 31' nach oben gedreht. Dann wird die Kolbenstange 46 in die Bereitschaftsposition vorgeschoben.

Das beim Nachuntendrehen des Löffels 31 aus diesem herausfallende nunmehr verbrauchte Röhrchen 29 fällt in eine Auffangvorrichtung 53, die aus zwei etwa V-förmig zueinander ausgerichteten Rutschen 54,55 besteht. Das verbrauchte Röhrchen fällt je nach Drehrichtung des Drehteiles 37 in die Rutsche 54 oder in die Rutsche 55. Die Rutsche 54 mündet in die Rutsche 55. Die Rutsche 55 mündet ihrerseits in einen Sammelbehälter 56, der ebenfalls schräg angeordnet ist. Am unseren Ende des Sammelbehälter 56 befindet sich eine Entnahmeöffnung 57 für die verbrauchten Röhrchen.

An der Frontseite 17 des Gehäuses 2 ist noch ein Durchflussmesser 58 für die verschiedenen Gase vorgesehen. Ferner sind an der Frontseite 17 Be- bzw. Entlüftungsschlitze 59 für das Gebläse vorgesehen.

Wenn eine flüssige Probe verbrannt werden soll, so kann zum Verschließen der Einführöffnung 4 des Quarzrohres 7 der in Figur 3 dargestellte Stopfen 59 verwendet werden. Dieser besteht aus Glas und weist eine Durchbohrung mit zwei Abschnitten 60,61 unterschiedlichen Durchmesser auf. Die Bohrung 60,61 ist mit einem sogenannten Septum 62 verschlossen. Die flüssige Probe befindet sich in einer Injektionsspritze 63. Die Injektionsnadel 64 wird durch das Septum 62 hindurchgestoßen. Dann wird die flüssige Probe in den Abschnitt 8 des Quarzrohres 7 eingespritzt.

Das Septum 62 besteht aus einem plastischen Material, welches den Bohrungsabschnitt 61 nach dem Herausziehen der Injektionsnadel 64 wieder gasdicht verschließt.

Die Steuerung der automatischen Einführvorrichtung, der automatischen Ladevorrichtung und der zeitabhängigen Aufheizung und Abkühlung der Aufschlußzone erfolgt durch eine elektronische Steuereinheit mit Mikroprozessor, die jedoch, da sie nicht Gegenstand der Erfindung ist, nicht dargestellt ist.

Der Gegenstand der vorliegenden Anmeldung kann auch angesehen werden als Kombination bestehend aus Muffelofen, gewickelten Pyrolyserohren, programmierbarer Probeneinlaßzone und einem oder mehreren, spezifischen Detektoren zur quantitativen Analyse von Elementen und Atomgruppen in organischen oder anorganischen Stoffen. Dabei sind in Abwandlung von dem beschriebenen Ausführungsbeispiel Variationen möglich. So kann die zur Analyse notwendige Temperatur unter Verwendung von Heizbrennern, Widerstandsöfen, Induktionsöfen oder Heizstrahlern aufgebracht werden. Die Analyse kann weiterhin in Gegenwart oder unter Ausschluß eines oder mehrerer Katalysatoren erfolgen. Sie kann ferner in Gegenwart eines inerten Gases unter Ausschluß einer oxidativen oder reduktiven Matrix erfolgen. Auch kann die Analyse unter oxidativen oder reduktiven Bedingungen erfolgen und die Länge, das Volumen und die Konfiguration des Pyrolyserohres kann je nach Anwendung variieren.

ANSPRÜCHE
=========

1. Verbrennungsapparat für die Elementaranalyse, insbesondere für die Stickstoffanalyse, mit einem Quarzrohr (7), das sich ausgehend von einer Einführöffnung (4) für das zu untersuchende Medium durch eine Aufschlußzone (9) und durch eine Hauptverbrennungszone (25) bis zu einer Ausgangsöffnung (6) erstreckt, mit mindestens einem Sauerstoffzuführungsanschluß (12, 13), an dem in der Aufschlußzone (9) befindlichen Abschnitt (8) des Quarzrohres (7) mit einem ersten Heizvorrichtungsteil (11), welcher eine Veränderung der Heiztemperatur in der Aufschlußzone (9) nach einem bestimmten zeitlichen Programm erlaubt, mit einem zweiten Heizvorrichtungsteil (28) zum Heizen der Hauptverbrennungszone (25) mit einer im wesentlichen konstanten Temperatur, und mit mindestens einem Verschlußstopfen (32, 32') für die Einführöffnung (4) des Quarzrohres (7), dadurch gekennzeichnet, daß für die Feststoffanalyse - wie an sich bekannt - an jedem Verschlußstopfen (32, 32') eine Aufnahmeschale (31, 31') für die Feststoffprobe vorgesehen ist, welche beim Einführen des Verschlußstopfens in die Einführöffnung in den in der Aufschlußzone (9) des Quarzrohres (7) befindlichen Abschnitt (8) ragt, und daß eine automatische Einführvorrichtung (33) zum aufeinanderfolgenden oder wechselweisen Einführen der mit den Aufnahmeschalen (31,31') versehenen Verschlußstopfen (32, 32') vorgesehen ist.

2. Verbrennungsapparat nach Anspruch 1, dadurch gekennzeichnet, daß eine automatische Ladevorrichtung (34) zum Füllen der Aufnahmeschalen (31, 31') an den Verschlußstopfen (32, 32') mit Feststoffproben vorgesehen ist.

3. Verbrennungsapparat nach Anspruch 1 oder 2, dadurch gekennzeichnet, daß die automatische Einführvorrichtung (33) ein Drehteil (37) mit mindestens zwei Schubzylindern (35, 36) aufweist, daß das Drehteil (37) um eine Drehachse (38) drehbar ist, die sich parallel zu dem in der Aufschlußzone (9) befindlichen Abschnitt (8) des Quarzrohres (7) erstreckt, daß die Kolbenstange (45,46) jedes Schubzylinders (35,36) sich parallel zu der Drehachse erstreckt, daß an dem aus dem Schubzylinder (35, 36) herausragenden Ende jeder Kolbenstange (45, 46) ein Verschlußstopfen (32, 32') mit Aufnahmeschale (31, 31') befestigt ist und daß jeder Schubzylinder (35, 36) durch Drehung des Drehteiles (37) in eine fluchtende Position mit dem sich in der Aufschlußzone (9) befindlichen Abschnitt (8) des Quarzrohres (7) bringbar ist.

4. Verbrennungsapparat nach Anspruch 2 oder 3, dadurch gekennzeichnet, daß die Feststoffproben in Probenbehälter (29) wie beispielsweise Schiffchen oder Röhrchen untergebracht sind, die mit einem durch Hitzeeinwirkung abschmelzbaren Verschluß (3o) versehen sind, und daß die Ladevorrichtung (34) ein oberhalb der Einführöffnung (4) des Quarzrohres (7) quer zur Drehachse (38) des Drehteiles (37) verschiebbar angeordnetes Magazin aufweist, in dem die Probenbehälter (29) nebeneinander und parallel zur Drehachse (38) angeordnet sind und nacheinander von dem Magazin in jeweils eine vor der Einführöffnung (4) des Quarzrohres (7) von dem betreffenden Hubzylinder (35, 36 ) in Bereitschaftsposition gehaltene Aufnahmeschale (31, 31') überführt werden.

5. Verbrennungsapparat nach Anspruch 4, dadurch gekennzeichnet, daß das Magazin aus einer Magazinplatte (48) besteht, die mit schlitzförmigen Aufnahmeöffnungen (49) für die Probenbehälter (29) versehen ist, wobei die Schlitzbreite der Aufnahmeöffnungen (49) größer als der Durchmesser der Probenbehälter (29) ist, und daß die Magazinplatte (48) auf einer Führungsplatte (47) verschiebbar angeordnet ist, die oberhalb der Einführöffnung (4) des Quarzrohres (7) mit einer einzigen schlitzförmigen Durchfallöffnung (52) für einen Probenbehälter (49) versehen ist.

6. Verbrennungsapparat nach Anspruch 3, dadurch gekennzeichnet, daß unterhalb des durch die Drehung des Drehteiles (37) definierten Schwenkweges der Aufnahmeschalen (31, 31') an dem von den Kolbenstangen (45, 46) der Hubzylinder (35, 36) gehaltenen Verschlußstopfen (32, 32') eine Auffangvorrichtung (53) für die bei der Schwenkung der Aufnahmeschalen (31, 31') aus diesen herausfallenden leeren Probenbehälter (29) vorgesehen ist.

7. Verbrennungsapparat nach Anspruch 6, dadurch gekennzeichnet, daß an dem Drehteil (37) zwei Hubzylinder (35, 36) vorgesehen sind, daß das Drehteil (37) wechselweise jeweils um 180$^{\circ}$C in entgegengesetzten Richtungen schwenkbar ist, daß die Auffangvorrichtung (53) aus zwei etwa V-förmig zueinander ausgerichteten Rutschen (54, 55) besteht, und daß die Rutschen (54, 55) in einen

4 0064160

Sammelbehälter (56) münden.

8. Verbrennungsapparat nach Oberbegriff des Anspruches 1 oder nach einem der vorhergehenden Ansprüche, dadurch gekennzeichnet, daß der sich durch die Hauptverbrennungszone (25) erstreckende Abschnitt (27) des Quarzrohres (7) gewunden ist.

9. Verbrennungsapparat nach Anspruch 8, dadurch gekennzeichnet, daß der sich durch die Hauptverbrennungszone (25) erstreckende Abschnitt (27) des Quarzrohres (7) nach Art einer Wendel oder einer Spirale gewunden ist.

10. Verbrennungsapparat nach Oberbegriff des Anspruches 1, dadurch gekennzeichnet, daß zum Verschließen der Einführöffnung (4) des Quarzrohres (7) für die Analyse flüssiger Proben ein durchbohrter Verschlußstopfen (59) vorgesehen ist, dessen Bohrung (60, 61) mit einem plastischen Material (62) verschlossen ist, das mit einer Injektionsnadel (64) zum Einspritzen der flüssigen Probe in das Quarzrohr (7) durchsteckbar ist und die Bohrung (60, 61) nach dem Herausziehen der Injektionsnadel (64) wieder gasdicht verschließt.

FIG.1

FIG.2

FIG.3

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-1 946 422  (L.A. WEGNER)<br>* Ansprüche * | 1 | G 01 N  31/12 |
| A | US-A-2 746 845  (L.V. GUILO)<br>*  Spalte 2, Zeilen 59-72; Spalte 3, Zeilen 1-19 * | 10 | |
| A | US-A-3 647 385  (T.M. STEPHENS) | 1 | |
| A | US-A-4 049 134  (I.E. DOLGEN) | 1 | |
| A | US-A-4 055 259  (J. SIBRAVA) | 1 | |

| RECHERCHIERTE SACHGEBIETE (Int. Cl. ³) |
|---|
| G 01 N  31/12 |

Der vorliegende Recherchenbericht wurde für alle Patentansprüche erstellt.

| Recherchenort | Abschlußdatum der Recherche | Prüfer |
|---|---|---|
| DEN HAAG | 21-07-1982 | CALLEWAERT-HAEZEBROU |